# EUROPÄISCHE PATENTSCHRIFT

(11) **EP 3 672 003 B1**
(45) Veröffentlichungstag und Bekanntmachung des Hinweises auf die Patenterteilung: **22.11.2023**
(21) Anmeldenummer: 18213036.9
(22) Anmeldetag: 17.12.2018
(51) Int. Cl.: H02G 3/22, F16L 5/00, F16L 5/02

(54) **VERWENDUNG EINER DURCHFÜHRUNG ZUM EINGIESSEN IN EIN WANDELEMENT**
USE OF A FEED THROUGH FOR CASTING INTO A WALL ELEMENT
UTILISATION D'UNE TRAVERSÉE À COULER DANS UN ÉLÉMENT MURAL

(43) Veröffentlichungstag der Anmeldung: 24.06.2020
(73) Patentinhaber: Hauff-Technik GmbH & Co. KG, 89568 Hermaringen (DE)
(72) Erfinder: DELIKOSTAS, Christos, 89537 Giengen (DE); BUCKHARDT, Andreas, 89555 Heidenheim (DE)
(74) Vertreter: König Szynka Tilmann von Renesse Patentanwälte Partnerschaft mbB München

(56) Entgegenhaltungen:
- EP-A1- 2 899 332
- EP-A1- 3 061 890
- EP-A1- 3 255 330
- DE-A1- 2 120 070
- DE-A1- 3 005 144
- DE-A1- 10 007 527
- FR-A1- 2 557 388
- US-A- 5 941 535
- US-A1- 2015 263 498

## Beschreibung

Die vorliegende Erfindung betrifft eine Durchführung zum Eingießen in ein Wandelement und Hindurchführen einer Leitung.

Das Eingießen der Durchführung erfolgt in der Regel im Zuge der Herstellung des Wandelements, wenn dieses also bspw. aus Beton gegossen wird. Die Durchführung kann dabei an einer Schalung montiert werden, anschließend sitzt sie baulich integriert in der Betonwand. Sie hält eine Durchgangsöffnung zwischen den einander entgegengesetzten Seitenflächen der Wand frei, durch die dann ein Kabel oder eine anderweitige Leitung verlegt werden kann.

Die DE 21 20 070 A1 betrifft eine Durchführung mit einem ziehharmonikaförmigen Isolierstoffschlauch, der mit der Durchführung eingegossen und anschließend zum Abdichten gegen ein Kabel oder Rohr herausgezogen wird.

Die DE 30 05 144 A1 betrifft ebenfalls eine Durchführung, die Anschlussstutzen aufweist, welche nach dem Eingießen der Durchführung ausgeklappt werden.

Die EP 3 255 330 A1 betrifft eine zylindrische Dichthülse, die an ihren Enden Stülpabschnitte aufweist.

Die US 5,941,535 A betrifft eine Durchführung für Betontanks in Kläranlagen, durch welche nach dem Eingießen ein Rohr verlegt wird.

Die US 2015/263498 A1 betrifft ein wassergeschütztes bzw. -dichtes Gehäuse für elektrische Leitungen, welches mit einem Fitting ausgestattet ist.

Die EP 3 061 890 A1 betrifft eine Durchführung, die mit mehreren Fittingen vorausgestattet ist und in eine Wand eingegossen wird.

Die FR 2 557 388 A1 betrifft eine Durchführung für Telekommunikationskabel, die in Schutzrohren geführt sind und mit Schrumpfschläuchen gedichtet werden.

Die DE 100 07 527 A1 betrifft eine Pressdichtung mit einem herausnehmbaren in Elastomer-Einsatz, wobei an der Pressdichtung ein Schutzrohr positioniert ist.

Der vorliegenden Erfindung liegt das technische Problem zugrunde, eine besonders vorteilhafte Verwendung bzw. Durchführung als Gegenstand der Verwendung anzugeben.

Dies wird erfindungsgemäß mit der Verwendung gemäß Anspruch 1 gelöst. Die Durchführung weist einen Stülpabschnitt auf, der während des Eingießens der Durchführung eingestülpt ist und nach dem Eingießen ausgestülpt wird, wobei anschließend in den ausgestülpten Stülpabschnitt ein Schutzrohr eingeschoben wird. In dem Schutzrohr wird die eigentliche Leitung verlegt, etwa das Kabel bei dem Beispiel eingangs.

Diese Durchführung bzw. das Vorgehen nach den Schritten i.) - iii.) gemäß Anspruch 1 kann bspw. insoweit von Vorteil sein, als die Durchführung im eingestülpten Zustand (Schritt i) kompakt ist, was bspw. das Einschalen vereinfachen kann. Zudem ist auch ein Einbau in Wandelemente mit vergleichsweise geringer Dicke möglich. Der ausgestülpte Stülpabschnitt kann dann hingegen gut zugänglich sein, was das Einschieben des Schutzrohres bzw. ein etwaiges Befestigen davon vereinfachen kann. Das Schutzrohr wird typischerweise in einem Graben bzw. unter anderweitig beengten Verhältnissen (z. B. mehrere Schutzrohre neben- bzw. übereinander, siehe unten) an das Wandelement geführt, weswegen eine gute und einfache Handhabbarkeit von Vorteil ist. Das Ausstülpen des Stülpabschnitts ist insoweit auch ein vergleichsweise einfacher Vorgang, es muss bspw. nicht erst aufwendig eine Anschlussmuffe oder dergleichen an der eingegossenen Durchführung montiert werden. Dies kann bspw. auch hinsichtlich einer Verringerung der Zahl an Verbindungsstellen von Vorteil sein; speziell bei Arbeiten am Erdreich erhöht jede Verbindungsstelle die Gefahr einer möglichen Verschmutzung bei der Montage und damit einer möglichen späteren Undichtigkeit.

Dies kann speziell hinsichtlich des zweischrittigen Verlegens von zunächst dem Schutzrohr und dann später der Leitung von Vorteil sein, das Anschließen des Schutzrohres kann dann nämlich in einer frühen Bauphase auf relativ einfache Weise möglich sein. Die eigentliche Leitung wird typischerweise erst deutlich später durch das Schutzrohr hindurch verlegt (durchgeschoben), bevorzugt ist das Schutzrohr in diesem Zeitpunkt dann bereits mit Erdreich bedeckt. Es ist dann also auch die Anschlussstelle von Durchführung und Schutzrohr nicht mehr zugänglich, weswegen der Qualität der zuvor durchgeführten Montagearbeiten besondere Bedeutung zukommt. Das Anschließen des Schutzrohres in der frühen Bauphase verdient also besondere Beachtung, zumal diese Arbeiten im Kontext der Erdarbeiten oftmals unter hohem Zeitdruck erfolgen (Kosten der Maschinen etc.). Die später hindurchgeführte Leitung wird zwar bevorzugt auch gesondert zur Durchführung hin abgedichtet, im Falle eines mangelhaft angeschlossenen Schutzrohres könnte jedoch bspw. ein zwischenzeitlicher Verschmutzungseintrag auch diese Dichtstelle beeinträchtigen.

Weitere bevorzugte Ausgestaltungen finden sich in den abhängigen Ansprüchen und der gesamten Offenbarung. Diese richtet sich sowohl auf die Verwendung als auch auf ein entsprechendes Montageverfahren bzw. Verfahren zum Herstellen eines Wandelements mit eingegossener Durchführung.

Das Schutzrohr kann bspw. einen Außendurchmesser von mindestens 50 mm, 70 mm, 90 mm bzw. 100 mm haben, mit möglichen (davon unabhängigen) Obergrenzen bei z. B. höchstens 300 mm, 250 mm, 200 mm bzw. 180 mm (jeweils in Reihenfolge der Nennung zunehmend bevorzugt). Der ausgestülpte Stülpabschnitt hat einen passenden Innendurchmesser, er kann beim Einschieben des Schutzrohres auch etwas gedehnt werden. In dem genannten Durchmesserbereich kann einerseits das Ausstülpen gut möglich sein (wird bei kleineren Durchmessern zunehmend schwieriger), andererseits sind die durch das Eigengewicht des Schutzrohres bedingten Kräfte dann auch noch nicht zu groß.

Wie bereits erwähnt, wird der ausgestülpte Stülpabschnitt bevorzugt an dem Schutzrohr befestigt, besonders bevorzugt wird auf einer Außenwandfläche des Stülpabschnitts ein Spannmittel angeordnet, mit dem der Stülpabschnitt auf das Schutzrohr angedrückt wird. Es liegt dann eine Innenwandfläche des Stülpabschnitts zuverlässig dichtend gegen eine Außenwandfläche des Schutzrohres an. Als Spannmittel kann bspw. ein Spannband oder eine Spannschelle (mit Schraubenantrieb) vorgesehen sein.

Ohne ausdrücklich gegenteilige Angabe beziehen sich im Rahmen dieser Offenbarung "innen" und "außen" auf zu einer Rohrachse des Schutzrohres senkrechte, davon weg weisende Richtungen (im Folgenden auch als "Radialrichtungen" bezeichnet). Die Rohrachse, die bspw. auch mit einer Längsachse der von der Durchführung freigehaltenen Durchgangsöffnung zusammenfällt, ergibt sich aus der Orientierung des Schutzrohres dort, wo es in den Stülpabschnitt eingeschoben ist (inwiefern sich das Schutzrohr dann zur Wand beabstandet z. B. gekrümmt, erstreckt ist insofern unerheblich). Eine nachstehend in Bezug genommene "Längsrichtung der Leitung" liegt bevorzugt parallel zur Rohrachse (in der Praxis kann es selbstverständlich im vorliegenden Zusammenhang nicht weiter relevante Abweichungen von einer exakten Parallelität geben). Im Falle des Stülpabschnitts wird hinsichtlich der Zuordnung "innen"/"außen" der ausgestülpte Zustand zugrunde gelegt (eingestülpt kann also die Innenwandfläche nach außen gewandt sein, siehe unten). Die Angabe "umlaufend" bezieht sich auf einen Umlauf um die Rohrachse.

In einem Schnitt senkrecht zur Rohr- bzw. Durchgangsöffnungs-Längsachse sind Kreisgeometrien bevorzugt, jedenfalls bei Stülpabschnitt und Schutzrohr bzw. auch der Durchgangsöffnung (diese wird in der Regel von einem Rohrelement freigehalten, siehe unten). Wie nachstehend im Kontext unterschiedlicher Merkmale deutlich wird, ist der Stülpabschnitt bevorzugt ein Teil bzw. Abschnitt einer Stülphülse. Diese ist aus einem Elastomermaterial vorgesehen, bevorzugt hat sie eine im Wesentlichen hohlzylindrische Form (also im eben genannten Schnitt eine Kreisform). Zur Ausbildung eines Filmscharniers kann die Wandstärke der Stülphülse in einem Axialschnitt betrachtet lokal verringert sein, im Vergleich zum Stülpabschnitt und/oder einem Montageabschnitt (siehe unten). Wenngleich eine Stülphülse bevorzugt ist, also eine im Gesamten aus dem Elastomermaterial geformte Hülse, könnte der Stülpabschnitt im Allgemeinen auch als Elastomerteil direkt an ein Rohrelement aus Hartkunststoff angeformt sein. Es könnte also bspw. in einem 2K-Spritzgussverfahren ein Rohrelement aus Hartkunststoff und an dieses der Stülpabschnitt aus bspw. einem thermoplastischen Elastomer gespritzt sein. Ebenso könnte die Stülphülse (mit Montageabschnitt etc.) direkt an das Rohrelement angespritzt sein, bevorzugt handelt es sich jedoch um separat hergestellte, zusammengesetzte Teile.

Das "Elastomermaterial" ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikonbasiertes Material handeln, etwa Silikonkautschuk bzw. Silikonelastomer. Das Rohrelement kann bspw. eine Shore-Härte (D) von mindestens 50 Shore, 60 Shore bzw. 70 Shore haben, mit möglichen Obergrenzen bei höchstens 85 Shore bzw. 80 Shore, jedenfalls im Falle von Kunststoff.

In bevorzugter Ausgestaltung ist der Stülpabschnitt in dem Schritt gemäß Ziffer i.) innerhalb und dann in dem Schritt gemäß Ziffer ii.) außerhalb des Wandelements angeordnet. Dies bezieht sich auf die Längsrichtung der Leitung, der Stülpabschnitt ist also aus Sicht des Wandelements gesehen eingestülpt diesseits einer Seitenfläche der Wand und ausgestülpt jenseits davon angeordnet. Dies kann bspw. insoweit von Vorteil sein, als beim Eingießen bspw. auch ein flächiges Schalungselement anliegen kann, also keine Überstände zu berücksichtigen sind. Anschließend beim Einschieben des Schutzrohres steht der Stülpabschnitt nach außen hervor und ist er damit besonders gut zugänglich, insbesondere zum Platzieren bzw. Betätigen eines Spannmittels.

Gemäß einer bevorzugten Ausführungsform ist der Stülpabschnitt Teil einer Stülphülse (siehe vorne), wobei diese Stülphülse eine monolithisch mit dem Stülpabschnitt geformte, umlaufende Lippe aufweist. Diese Lippe liegt beim Eingießen an der Schalung an. Dazu erstreckt sie sich im unbelasteten Zustand, wenn also kein Schalungselement dagegen drückt, zu ihrem freien Ende hin bevorzugt schräg nach außen, also in Richtung des ausgestülpten Stülpabschnitts und dabei von der Rohrachse weg. Die Lippe ist bevorzugt radial außerhalb des Filmscharniers der Stülphülse angeordnet, sodass dieses von dem Vergussmaterial freigehalten gut beweglich bleibt.

"Monolithisch" meint im Rahmen dieser Offenbarung frei von Materialgrenzen im Inneren, also Materialgrenzen zwischen unterschiedlichen Materialien bzw. Materialien unterschiedlicher Herstellungsgeschichte, jedenfalls von statistisch verteilten Einschlüssen abgesehen (z. B. Farbstoffpartikeln). Die "monolithische" Stülphülse ist bevorzugt ein Formteil, das in einem Schritt durch Gießen bzw. Pressen in eine Form hergestellt ist.

Gemäß einer bevorzugten Ausführungsform weist die Durchführung einen Zahnring auf. In diesen wird das Schutzrohr in dem Schritt gemäß Ziffer iii.) eingeschoben, der Zahnring hält es dann gegen ein Herausrutschen gesichert. Die zum Herausziehen des Schutzrohres aus dem Zahnring notwendige Kraft ist größer als die zum Einschieben notwendige Kraft, sie kann bspw. mindestens das 2-, 4-, 6-, 8- bzw. 10-fache ausmachen (mit möglichen Obergrenzen bei z. B. höchstens dem 1000-, 500-, 100- bzw. 50-fachen). Der Zahnring weist umlaufend verteilt eine Vielzahl Zähne auf (mindestens 10, 20, 30, 40 bzw. 50, mit möglichen Obergrenzen bei z. B. höchstens 500 bzw. 100), die sich nach dem Einschieben des Schutzrohres an diesem verkrallen (sobald dieses auch nur geringfügig entgegengesetzt der Einschieberichtung bewegt wird bzw. würde). Der Zahnring kann das eingeschobene Schutzrohr zuverlässig halten, was bspw. auch bereits während der Montage von Vorteil sein kann. Bevorzugt sind das Andrücken des Stülpabschnitts auf das eingeschobene Schutzrohr (mithilfe eines Spannmittels, siehe vorne) und die Fixierung mittels Zahnring kombinierte Maßnahmen, wobei der Zahnring auch das anschließende Andrücken des Stülpabschnitts vereinfachen kann (er hält das Schutzrohr und beugt so Montagefehlern vor). Generell liegt ein Vorteil des Zahnrings in der selbsttätigen, allein durch das Einschieben des Schutzrohres erreichten Fixierung.

Im Allgemeinen ist bspw. auch ein Zahnring aus einem Hartkunststoff denkbar, speziell im Falle eines als Wellrohr bzw. Spiralschlauch vorgesehenen Schutzrohres. In bevorzugter Ausgestaltung ist der Zahnring jedoch ein Metallteil. Prinzipiell ist auch ein Frästeil denkbar, bevorzugt ist der Zahnring jedoch aus einem Blech herausgearbeitet, etwa durch Laserschneiden oder bevorzugt Stanzen (der Zahnring ist dann also ein Stanzteil). Der Zahnring kann bevorzugt umlaufend in sich geschlossen, im Allgemeinem aber bspw. auch mit einer Trennfuge vorgesehen sein (oder sogar auch mehrteilig). Prinzipiell ist denkbar, dass die Zähne des Zahnrings vor dem Einschieben des Schutzrohres noch eine dem Flächenmaterial bzw. Blech entsprechende Ausrichtung haben, also nicht bzw. allenfalls geringfügig aus der Ebene herausgebogen sind. Sie können sich bspw. gewinkelt, insbesondere senkrecht zur Rohrachse nach innen erstrecken und dann beim Einschieben des Schutzrohres von diesem in Einschieberichtung gebogen werden (und entgegen gesetzt eine Verkrallung schaffen). Bevorzugt sind die Zähne des als Laser- bzw. Stanzteil vorgesehenen Zahnrings jedoch bereits zuvor gebogen, haben Sie also bspw. in einem Axialschnitt betrachtet eine liegende U-bzw. V-Form. Diese Form ist entgegen der Einschieberichtung geschlossen, also in Einschieberichtung offen. Das Schutzrohr gleitet entsprechend beim Einschieben entlang der Zähne, in entgegengesetzter Richtung verkrallen sich diese.

Gemäß einer bevorzugten Ausführungsform deckt der eingestülpte Stülpabschnitt den Zahnring nach innen ab, dieser ist während des Eingießens bzw. auch bereits zuvor (Lagerhaltung und Transport) geschützt. Prinzipiell könnte der Zahnring bspw. auch in die Dichthülse bzw. in ein Rohrelement der Durchführung eingeformt sein, also bspw. als Einlegeteil umspritzt. Bevorzugt handelt es sich um ein separates, eingesetztes Teil (auch unabhängig von der Abdeckung nach innen). Die bevorzugte Abdeckung nach innen kann in diesem Zusammenhang auch sicherstellen helfen, dass der Zahnring nicht verrutscht bzw. herausfällt, also dann beim Einschieben des Schutzrohres an der gewünschten Position sitzt.

In bevorzugter Ausgestaltung ist während des Eingießen der Durchführung gemäß Ziffer i.) in den eingestülpten Stülpabschnitt ein Verschluss eingesetzt, der die Durchführung zu dieser Seite des Wandelements hin verschließt (zu der Seite, von welcher aus das Schutzrohr eingeschoben wird). Hierbei kann es sich bspw. um einen Rohrverschlussdeckel, einen Lamellenstopfen oder auch einen Schaumstoffkörper handeln, etwa eine Ronde aus expandiertem Polypropylen. Ist ein Zahnring vorgesehen, kann die eben diskutierte Abdeckung durch den eingestülpten Stülpabschnitt vorteilhafterweise auch einem Verkrallen des Verschlusses vorbeugen.

Gemäß einer bevorzugten Ausführungsform ist der Stülpabschnitt Teil einer Dichthülse (siehe vorne) und ist der Zahnring in einem Montageabschnitt der Dichthülse angeordnet. Dieser Montageabschnitt sitzt sowohl bei dem Schritt gemäß Ziffer i.) als auch bei jenem gemäß iii.) innerhalb des Wandelements, ist dann also stabil eingebettet. Der dort angeordnete Zahnring kann das Schutzrohr entsprechend zuverlässig halten.

Ganz allgemein wird das Schutzrohr entsprechend der Erfindung soweit eingeschoben, dass das Ende des Schutzrohres dann innerhalb des Wandelements liegt. Es kommt also das durch den ausgestülpten Stülpabschnitt eingeschobene Ende des Schutzrohres innerhalb des Wandelements zu liegen, ist also bei fertig bzw. vollständig eingeschobenen Schutzrohr dort angeordnet (in dieser Position wird entsprechend der Erfindung die Leitung durch das Schutzrohr verlegt und insbesondere gegen die Durchführung gedichtet). Das Schutzrohr wird also ein Stück in eine von der Durchführung in dem Vergussmaterial (in der Regel Beton) freigehaltene Durchgangsöffnung eingeschoben, sodass entsprechend der Erfindung das Wandelement selbst eine Stabilisierungs- bzw. Stützfunktion übernimmt. Letzteres kann speziell im Vergleich zu dem eingangs als Alternativlösung geschilderten Ansetzen einer gesonderten Rohrmuffe von Vorteil sein. Die Abstützfunktion kann bspw. während der Bauphase vorteilhaft sein, wenn es bspw. durch unsachgemäße Handhabung (Betreten des Schutzrohres) oder auch anschließend zu einer Querbelastung kommt, bspw. durch ein Absacken des Erdreichs bei nicht hinreichender Verdichtung.

Wie bereits erwähnt, ist der Stülpabschnitt in bevorzugter Ausgestaltung Teil einer Stülphülse mit einem Montageabschnitt. Bevorzugt wird das Schutzrohr in dem Schritt gemäß Ziffer iii.) bis in den Montageabschnitt hinein eingeschoben (egal ob ohne oder bevorzugt mit einem Zahnring dort). Bevorzugt bildet die Stülphülse bzw. der Montageabschnitt einen Anschlag, bis zu welchem das Schutzrohr eingeschoben wird.

Gemäß einer bevorzugten Ausführungsform ist an einer Innenwandfläche des Montageabschnitts eine nach innen hervortretende, sich umlaufend (bevorzugt vollständig umlaufend) erstreckende Erhebung vorgesehen. Diese kann zum einen eine Anlage an dem dann eingeschobenen Schutzrohr sicherstellen, bspw. auch hinsichtlich der Dichtigkeit Relevanz haben. Zum anderen kann sie in Kombination mit dem Zahnring diesem eine definierte Axialposition vorgeben, ihn also gegen ein Verrutschen sichern. Bevorzugt sind mehrere Erhebungen vorgesehen, besonders bevorzugt genau zwei, dazwischen ist dann der Zahnring axial gesichert.

In bevorzugter Ausgestaltung ist an einer Innenwandfläche des Stülpabschnitts eine Vertiefung vorgesehen, in welcher die Erhebung an der Innenwandfläche des Montageabschnitts angeordnet ist, wenn der Stülpabschnitt eingestülpt ist, also seine Innenwandfläche nach außen gewandt ist (vergleiche auch die vorstehenden Anmerkungen). Ist der Stülpabschnitt ausgestülpt, so stellt die Vertiefung eine nach innen offene Nut dar, im eingestülpten Zustand ist sie nach außen offen (und nimmt sie die Erhebung auf). Sind in dem Montageabschnitt mehrere Erhebungen vorgesehen, kann diesen jeweils eine eigene Vertiefung zugeordnet oder können sie auch in einer gemeinsamen Vertiefung angeordnet sein. Ist ein Zahnring vorgesehen, ist auch dieser bevorzugt in einer Vertiefung an der Innenwandfläche des eingestülpten Stülpabschnitts angeordnet, besonders bevorzugt gemeinsam mit dem bzw. den ihn axial einfassenden Erhebungen.

In bevorzugter Ausgestaltung ist an dem Stülpabschnitt eine Lasche angeordnet, an welcher der eingestülpte Stülpabschnitt zum Ausstülpen gegriffen werden kann, vorzugsweise mit der Hand (oder auch mit einer Zange). Beim ausgestülpten Stülpabschnitt ist die Lasche bevorzugt an dessen axialem Ende angeordnet und erstreckt sie sich nach radial außen.

Ganz allgemein weist die Durchführung bevorzugt ein Rohrelement auf, das nach dem Eingießen in das Wandelement in diesem verbleibt, also nicht herausgenommen wird. Die Stülphülse und das Rohrelement haben axial einen Überlapp, jedenfalls der ausgestülpte Stülpabschnitt steht dann gegenüber dem Rohrelement axial hervor. Das Rohrelement ist bevorzugt aus einem Hartkunststoffmaterial vorgesehen, z. B. ABS oder PVC. Im Allgemeinen kann ein solches Rohrelement der Durchführung auch für sich die gesamte Durchgangsöffnung freihalten und kann die Stülphülse bzw. der eingestülpte Stülpabschnitt radial innerhalb davon angeordnet sein.

Gemäß einer bevorzugten Ausführungsform begrenzt jedoch ein Montageabschnitt der Stülphülse zumindest einen Abschnitt der Durchgangsöffnung in dem Wandelement. Es legt sich also das Vergussmaterial beim Eingießen an eine Außenwandfläche des Montageabschnitts an. Dies kann bspw. insoweit von Vorteil sein, als dann die Stülphülse, die hinsichtlich der Stülpbarkeit aus einem weichen Material vorgesehen ist, eine Grenzfläche zu dem Vergussmaterial bildet. Dieses härtet nach dem Gießen aus, wobei es zu einem Schrumpfen kommen kann. Das weiche Material der Stülphülse kann dann mit einer gewissen Elastizität noch in Kontakt mit dem gehärteten Vergussmaterial bleiben, also einer Spaltbildung und damit möglichen Kriechpfaden für Feuchtigkeit vorbeugen helfen. Besonders vorteilhaft kann insofern eine Kombination mit dem Einschieben des Schutzrohres in den Montageabschnitt und damit in das Wandelement hinein sein, weil dann zusätzlich das eingeschobene Schutzrohr den Montageabschnitt nach außen und damit in die Anlage an dem gehärteten Vergussmaterial drückt.

In bevorzugter Ausgestaltung ist an der Außenwandfläche des Montageabschnitts, an welche sich das Vergussmaterial angelegt, eine sich nach außen erhebende, bevorzugt vollständig in sich geschlossen umlaufende Stegdichtung vorgesehen. Die Stegdichtung wird axial und nach außen hin von dem Vergussmaterial umschlossen. Bevorzugt können mehrere Stegdichtungen vorgesehen sein, also mindestens zwei und bspw. nicht mehr als fünf bzw. vier, besonders bevorzugt sind drei. Wie eben geschildert, kann das eingeschobene Schutzrohr dann auch die Stegdichtungen etwas nach außen und damit in eine dichtende Anlage drücken. Hinsichtlich einer Verkrallungsfunktion in dem Vergussmaterial kann sich eine jeweilige Stegdichtung zu ihrem freien Ende hin weiten, dann also mit einem Hinterschnitt in dem gehärteten Vergussmaterial sitzen. Bevorzugt erhebt sich eine jeweilige Stegdichtung jedoch hinterschnittfrei, weil dies die Herstellbarkeit der Durchführung bzw. Stülphülse in einem formenden Verfahren deutlich vereinfacht, speziell in Zusammenhang mit dem Andrücken nach außen durch das eingeschobene Schutzrohr jedoch keine Dichteinbußen ergibt.

Gemäß einer bevorzugten Ausführungsform ist der Montageabschnitt der Stülphülse auf ein Rohrelement der Durchführung aufgezogen, stützt also das Rohrelement den Montageabschnitt beim Eingießen nach radial innen ab. Bevorzugt ist das Rohrelement nur in einem Abschnitt des Montageabschnitts angeordnet (nicht im gesamten Montageabschnitt) und wird in einen anderen Abschnitt das Schutzrohr eingeschoben, siehe vorne. Das Rohrelement stützt die Stülphülse während des Eingießens ab, verbleibt dann jedoch auch darüber hinaus gemeinsam mit der Stülphülse in dem Wandelement; die beiden sind also dauerhaft baulich integriert, bspw. von Beton umschlossen. Das dauerhaft eingebaute Rohrelement kann bspw. auch mit Blick auf das spätere Hindurchführen bzw. -fädeln der Leitung vorteilhaft sein, hierbei nämlich einem Verrutschen der einzelnen Bestandteile der Durchführung innerhalb des Wandelements vorbeugen (das Leitungsende könnte sich verfangen und einzelne Teile verschieben, das Rohrelement schafft hierbei zusätzliche Stabilität).

Gemäß einer bevorzugten Ausführungsform wird beim Ausstülpen des Stülpabschnitts aus dem ein- in den ausgestülpten Zustand um genau ein Filmscharnier gestülpt. Dies kann bspw. im Vergleich zu einem Ausstülpen um zwei Filmscharniere (zweifaches Ausstülpen) einen gewissen Nachteil dahingehend darstellen, dass die Außenwandfläche (ausgestülpter Zustand) im eingestülpten Zustand nach innen gewandt ist. Es kann dann bspw. keine Spannschelle als integrales Teil bereits im eingestülpten Zustand platziert sein, die entsprechend nach dem Ausstülpen automatisch an der richtigen Stelle sitzt. Bei dem zweifachen Ausstülpen ist dies hingegen möglich. Das einfache Ausstülpen ist dennoch hinsichtlich der Stabilität bevorzugt. Da der ausgestülpte Stülpabschnitt und der Montageabschnitt dann axial im Wesentlichen miteinander fluchten, kann das bis in den Montageabschnitt eingeschobene Schutzrohr dann in diesem und damit in dem Wandelement radial ohne maßgebliches Spiel abgestützt sein.

Bei einer bevorzugten Ausführungsform ist die Stülphülse an ihren dem Stülpabschnitt entgegengesetzten Ende mit einem weiteren Stülpabschnitt ausgestattet. Dieser dient im Unterschied zu dem Stülpabschnitt für das Schutzrohr einer Anpassung an das Rohrelement der Durchführung. Hat das Rohrelement der Durchführung einen kleineren Außendurchmesser, kann der weitere Stülpabschnitt eingestülpt und kann so eine Anlage der Stülphülse an dem Rohrelement sichergestellt werden. Dies kann insbesondere bei dickeren Wänden der Fall sein, wenn nicht ein an einer Flanschplatte angeordneter Rohrstutzen selbst bzw. allein das Rohrelement bildet, sondern zusätzlich ein Verlängerungsrohr eingeschoben ist, vergleiche auch das Ausführungsbeispiel zur Illustration. Die Flanschplatte mit Rohrstutzen ist jenem Ende, in das das Schutzrohr eingeschoben wird, entgegengesetzt.

Eine solche Flanschplatte, die als Teil der Durchführung nach dem Eingießen an der entgegengesetzten Seitenfläche des Wandelements liegt, kann generell bevorzugt sein. Die Flanschplatte kann einerseits der Montage an einem Schalungselement dienen, andererseits kann die Durchführung über die Flanschplatte auch mit weiteren Durchführungen modulartig zusammengebaut werden. Dazu können an den Außenkanten der Flanschplatte Formschlusselemente vorgesehen sein, bevorzugt sind sämtliche Durchführungen bzw. Flanschplatten eines Moduls baugleich, weist also jedes Formschlusselement zueinander komplementäre Formschlusselementteile auf (männlich/weiblich). Das vorstehend diskutierte Rohrelement der Durchführung bzw. zumindest ein Abschnitt (Rohrstutzen) davon ist bevorzugt einstückig bzw. monolithisch mit der Flanschplatte vorgesehen, auch unabhängig von deren Ausstattung mit Formschlusselementen etc. Je nach Dicke des Wandelements kann mit dem Rohrstutzen der Flanschplatte dann ein weiteres Rohrstück zusammengesetzt sein, um bei dickeren Wänden ein längeres Rohrelement zur Verfügung zu stellen. Die Stülphülse kann einerseits auf dem Rohrstutzen der Flanschplatte selbst sitzen (dünne Wände) oder auf einem damit zusammengesetzten Rohrstück (dicke Wände).

In bevorzugter Ausgestaltung ist das Wandelement eine Außenwand eines Gebäudes, also eines zu mehreren Seiten, bevorzugt insgesamt umbauten Raumes. Prinzipiell ist auch ein Wohngebäude denkbar, bevorzugt handelt es sich um ein Technikgebäude, bspw. eine Transformatorenstation (Umspannwerk). Das Schutzrohr erstreckt sich gebäudeaußenseitig, entsprechend wird auch der Stülpabschnitt zur Gebäudeaußenseite hin ausgestülpt. Von der Gebäudeinnenseite her wird bevorzugt eine Dichtung an die Durchführung gesetzt, welche dann die Leitung gegen die Durchführung dichtet. Dies kann bspw. mit einer Pressdichtung erfolgen (Elastomerkörper, der mit Spannbolzen axial komprimiert wird und sich radial dichtend anlegt), oder es kann bspw. auch ein Schrumpfschlauch-Einsatz Anwendung finden.

Das Wandelement wird bevorzugt aus Beton gegossen, wobei die Durchführung vorzugsweise an einer Schalung befestigt wird, die nach dem Gießen des Wandelements entfernt wird.

Im Folgenden wird die Erfindung anhand eines Ausführungsbeispiels näher erläutert, wobei die einzelnen Merkmale im Rahmen des Hauptanspruchs auch in anderer Kombination erfindungswesentlich sein können.

Im Einzelnen zeigt
- Figur 1: eine Durchführung mit einer Stülphülse in einer Schrägansicht;
- Figur 2: eine geschnittene Seitenansicht zu der Durchführung gemäß Figur 1;
- Figur 3: in schematischer Darstellung die Installation einer Durchführung gemäß den Figuren 1 und 2;
- Figur 4: zu der Durchführung gemäß den Figuren 1 und 2 eine Seitenansicht;
- Figur 5: die Stülphülse der Durchführung gemäß den Figuren 1, 2 und 4 in einer geschnittenen Schrägansicht;
- Figur 6: einen Zahnring zum Anordnen in der Stülphülse.

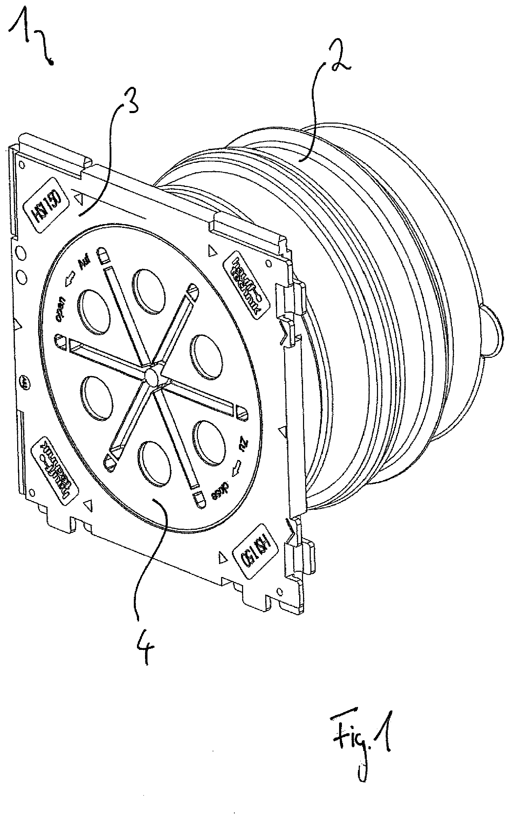

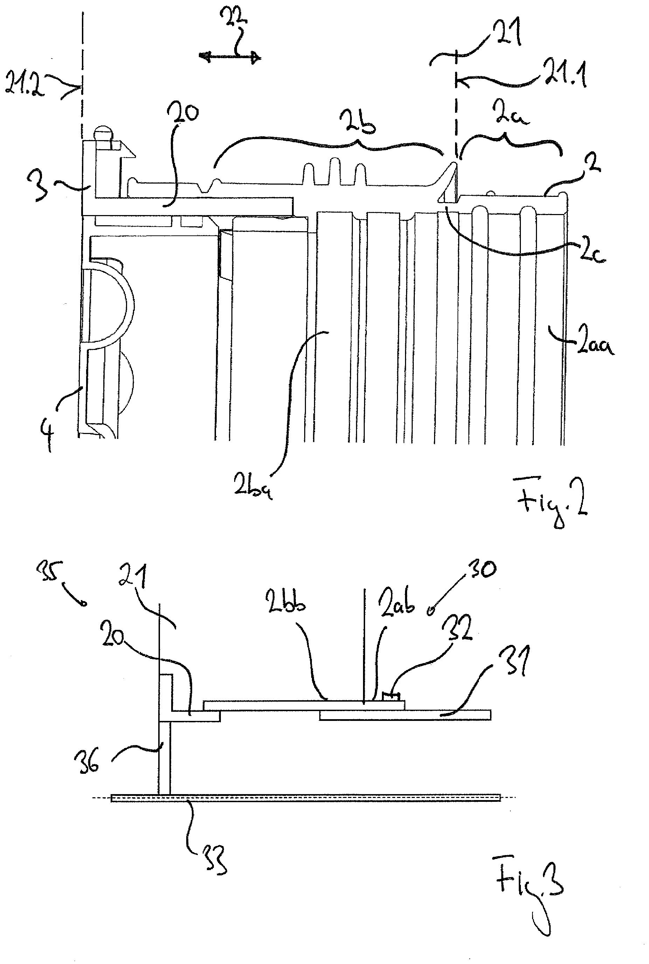

**Figur 1** zeigt eine Durchführung 1 in einer Schrägansicht. Die Durchführung 1 weist eine nachstehend im Detail diskutierte Stülphülse 2 auf, die auf ein Rohrelement 20 aufgeschoben ist, vergleiche auch den Schnitt gemäß Figur 2. Das Rohrelement 20 erstreckt sich von einer Flanschplatte 3 weg, mit welcher die Durchführung 1 beim Eingießen in ein Wandelement an einer Schalung anliegt, vergleiche auch Figur 3 zur Illustration. Während des Einbetonierens ist die Durchführung 1 an dem Ende mit der Flanschplatte 3 mit einem Verschlussdeckel 4 verschlossen, dieser kann nach dem Einbetonieren herausgenommen und es kann dann die eigentliche Leitung verlegt werden.

In **Figur 2** ist das betonierte Wandelement 21 strichliert angedeutet. Ein Stülpabschnitt 2a ist, bezogen auf eine Längsrichtung 22 der Leitung, in der Situation gemäß Figur 2 außerhalb des Wandelements 21 angeordnet. Ein Montageabschnitt 2b der Stülphülse 2 liegt innerhalb davon. In einer vorausgehenden Einbausituation, nämlich beim Eingießen der Durchführung 1, ist auch der Stülpabschnitt 2a innerhalb des Wandelements 21 angeordnet, ist er nämlich nach innen eingestülpt. Dazu sind der Stülpabschnitt 2a und der Montageabschnitt 2b über ein Filmscharnier 2c miteinander verbunden. Im eingestülpten Zustand liegt eine Innenwandfläche 2aa des Stülpabschnitts 2a an einer Innenwandfläche 2ba des Montageabschnitts 2b an. Da die Durchführung 1 mit eingestülptem Stülpabschnitt 2a eingegossen wird, kann an beide Seitenflächen 21.1, 21.2 des Wandelements jeweils ein flächiges Schalungselement gesetzt werden was das Einschalen vereinfacht. Zudem sind geringe Wanddicken möglich.

Während des Einbetonierens kann in den eingestülpten Stülpabschnitt 2a zusätzlich ein hier nicht dargestellter Verschluss eingesetzt sein, der die Durchführung 1 in der Darstellung gemäß Figur 2 zur rechten Seite hin verschließt. Dieser wird dann nach dem Eingießen herausgenommen, und der Stülpabschnitt 2a wird ausgestülpt.

Wie **Figur 3** illustriert, kann dann von einer Gebäudeaußenseite 30 her ein Schutzrohr 31 eingeschoben werden, und zwar bis in den Montageabschnitt 2b und damit in das Wandelement 21 hinein. Das Schutzrohr 31 ist damit auch gegen Querkräfte stabil gehalten. Auf einer Außenwandfläche 2ab des Stülpabschnitts 2a wird ein Spannmittel 32 angeordnet, welches den Stülpabschnitt 2a auf das Schutzrohr 31 andrückt. An die Außenwandfläche 2bb des Montageabschnitts 2b grenzt der Beton, wobei das eingeschobene Schutzrohr 31 auch einen Druck nach außen und damit eine Dichtigkeit dieser Grenzfläche bewirkt.

Nach dem Anschließen des Schutzrohres 31 kann auf der Gebäudeaußenseite 30 bereits mit Erdreich aufgeschüttet werden und ist die Installation insoweit abgeschlossen. Zum Verlegen einer Leitung 33 wird später der Verschlussdeckel 4 aus dem Rohrelement 20 genommen, die Leitung 33 kann von der Gebäudeinnenseite 35 oder auch von einer gebäudeaußenseitigen Zugangsstelle durch das Schutzrohr 31 geschoben werden. Anschließend wird eine Dichtung 36 platziert, welche die Durchführung 1 gegen die Leitung 33 abdichtet.

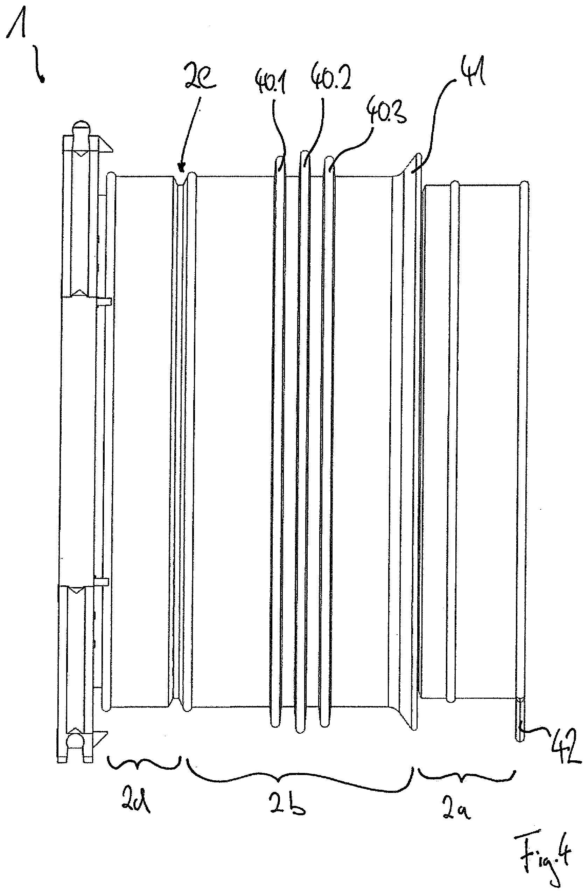

**Figur 4** zeigt die Durchführung 1 nochmals in einer Seitenansicht an der Außenwandfläche 2bb des Montageabschnitts 2b sind Stegdichtungen 40.1-40.3 zu erkennen, die miteinander eine Mehrstegdichtung bilden. Auch diese wird von dem eingeschobenen Schutzrohr 31 nach außen dichtend angedrückt. Endseitig am Montageabschnitt 2b ist eine umlaufende Lippe 41 zu erkennen, die beim Eingießen der Durchführung 1 an einer Schalung anliegt. Ferner ist in dieser Seitenansicht eine Lasche 42 endseitig des hier ausgestülpten Stülpabschnitts 2a zu erkennen, die einem Monteur das Ausstülpen erleichtert.

An dem dem Stülpabschnitt 2a entgegengesetzten Ende ist die Stülphülse mit einem weiteren Stülpabschnitt 2d versehen, der über ein Filmscharnier 2e an dem Montageabschnitt 2b hängt. In Figur 4 ist der weitere Stülpabschnitt 2d ausgestülpt, zur Anpassung an ein Rohrelement mit kleinerem Durchmesser kann er eingestülpt werden. Außenseitig auf dem weiteren Stülpabschnitt 2a kann ein hier nicht dargestelltes Spannmittel angeordnet sein, um die Stülphülse 2 relativ zu dem Rohrelement zu fixieren.

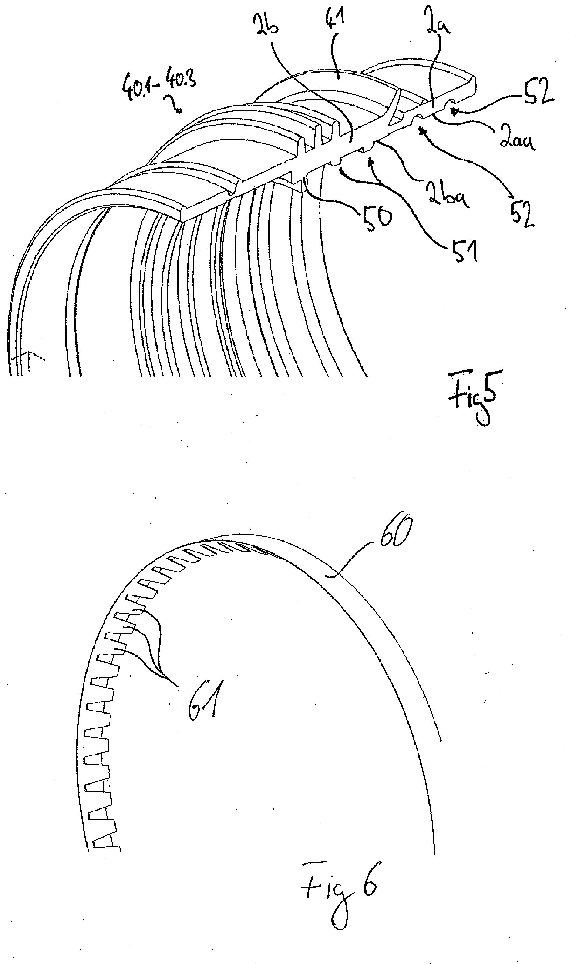

Die geschnittene Schrägansicht gemäß **Figur 5** lässt ferner auch innenseitig angeordnete Merkmale erkennen. Die Stülphülse bildet einen Anschlag 50, bis zu welchem das Schutzrohr 31 eingeschoben werden kann. Ferner sind an der Innenwandfläche 2ba im Montageabschnitt 2b zwei umlaufende Erhöhungen 51 ausgebildet, die bspw. hinsichtlich einer dichtenden Anlage an dem Schutzrohr 31 von Interesse sein können. An der Innenwandfläche 2aa des Stülpabschnitts 2a sind komplementäre Vertiefungen 52 vorgesehen, in denen die Erhebungen 51 bei eingestülptem Stülpabschnitt 2a zu liegen kommen.

**Figur 6** zeigt einen Ausschnitt eines Zahnrings 60, und zwar aus einer zu Figur 5 entgegengesetzten Blickrichtung, also aus der Richtung, aus welcher das Schutzrohr 31 eingeschoben wird. Der Zahnring 60 wird in dem Montageabschnitt 2b angeordnet und zwar innenseitig und dabei zwischen den Erhöhungen 51. Der Zahnring 60 ist vorliegend als gestanztes und gebogenes Blechteil geformt. Er weist umlaufend eine Vielzahl Zähne 61 auf, entlang welchen das Schutzrohr 31 beim Einschieben gleiten kann, die sich jedoch bei einer Bewegung entgegengesetzt in dessen Außenwandfläche verkrallen. Der Zahnring 60 hält das Schutzrohr 31 nach dem Einschieben in Position, und zwar auch bereits bevor das Spannmittel 32 den Stülpabschnitt 2ab auf das Schutzrohr 31 andrückt.

Bezogen auf die Darstellung gemäß Figur 5 kann der Zahnring 60, wie erwähnt, im Montageabschnitt 2b zwischen den Erhebungen 51 angeordnet sein, wobei dann die Vertiefungen 52 im Stülpabschnitt 2a auch zusammengefasst sein können, die beiden Erhebungen 51 samt Zahnring 60 also in einer gemeinsamen Vertiefung 52 platziert werden können.

## Patentansprüche

1. Verwendung einer Durchführung (1) zum Eingießen in ein Wandelement (21) und Hindurchführen einer Leitung (33),
wobei die Durchführung (1) einen Stülpabschnitt (2a) aufweist, der
i.) während des Eingießens der Durchführung (1) eingestülpt ist und
ii.) nach dem Eingießen der Durchführung (1) ausgestülpt wird, wobei anschließend
iii.) in den ausgestülpten Stülpabschnitt (2a) ein Schutzrohr (31) eingeschoben wird,
in welchem Schutzrohr (31) die Leitung (33) verlegt wird,
**dadurch gekennzeichnet, dass** das Schutzrohr (31) in dem Schritt gemäß Ziffer iii.) so weit eingeschoben wird, dass das Ende des Schutzrohres (31) dann bezogen auf eine Längsrichtung (22) der Leitung (33) innerhalb des Wandelements (21) liegt und das Wandelement (21) für das eingeschobene Schutzrohr (31) eine Stützfunktion übernimmt.

2. Verwendung nach Anspruch 1, bei welcher der Stülpabschnitt (2a) Teil einer Stülphülse (2) ist, die ferner eine mit dem Stülpabschnitt (2a) monolithische, umlaufende Lippe aufweist, die in dem Schritt gemäß Ziffer i.) an einer Schalung anliegt.

3. Verwendung nach einem der vorstehenden Ansprüche, bei welcher die Durchführung (1) einen Zahnring (60) aufweist, wobei das Schutzrohr (31) in dem Schritt gemäß Ziffer iii.) in den Zahnring (60) eingeschoben wird und dann von dem Zahnring (60) gegen ein Herausrutschen gesichert gehalten ist.

4. Verwendung nach Anspruch 3, bei welcher der Zahnring (60) ein Metallteil ist.

5. Verwendung nach Anspruch 3 oder 4, bei welcher der eingestülpte Stülpabschnitt (2a) in dem Schritt gemäß Ziffer i.) den Zahnring (60) bezogen auf Radialrichtungen nach innen abdeckt.

6. Verwendung nach einem der Ansprüche 3 bis 5, bei welcher der Stülpabschnitt (2a) Teil einer Stülphülse (2) ist, die ferner einen mit dem Stülpabschnitt (2a) monolithischen Montageabschnitt (2b) aufweist, wobei das Schutzrohr (31) in dem Schritt gemäß Ziffer iii.) bis in den Montageabschnitt (2b) hinein eingeschoben wird, wobei der Zahnring (60) in dem Montageabschnitt (2b) angeordnet ist.

7. Verwendung nach einem der vorstehenden Ansprüche, bei welcher der Stülpabschnitt (2a) Teil einer Stülphülse (2) ist, die ferner einen mit dem Stülpabschnitt (2a) monolithischen Montageabschnitt (2b) aufweist, wobei das Schutzrohr (31) in dem Schritt gemäß Ziffer iii.) bis in den Montageabschnitt (2b) hinein eingeschoben wird, wobei an einer Innenwandfläche (2ba) des Montageabschnitts (2b) eine sich umlaufend erstreckende, bezogen auf Radialrichtungen nach innen hervortretende Erhebung (51) vorgesehen ist.

8. Verwendung nach Anspruch 7, bei welcher eine Innenwandfläche (2aa) des Stülpabschnitts (2a), die nach dem Schritt gemäß Ziffer ii.) nach innen gewandt ist, in dem Schritt gemäß Ziffer i.) nach außen gewandt an der Innenwandfläche (2ba) des Montageabschnitts (2b) anliegt, wobei an der Innenwandfläche (2aa) des Stülpabschnitts (2a) eine Vertiefung (52) vorgesehen ist, in welcher die an der Innenwandfläche (2ba) des Montageabschnitts (2b) vorgesehen Erhebung (51) in dem Schritt gemäß Ziffer i.) angeordnet ist.

9. Verwendung nach einem der vorstehenden Ansprüche, bei welcher der Stülpabschnitt (2a) Teil einer Stülphülse (2) ist, die ferner einen mit dem Stülpabschnitt (2a) monolithischen Montageabschnitt (2b) aufweist, wobei sich in dem Schritt gemäß Ziffer ii.) ein Vergussmaterial des Wandelements (21) an eine Außenwandfläche (2bb) des Montageabschnitts (2b) anlegt.

10. Verwendung nach Anspruch 9, bei welcher an der Außenwandfläche (2bb) des Montageabschnitts (2b) eine sich nach außen erhebende, umlaufende Stegdichtung (40.1-40.3) ausgebildet ist, vorzugsweise eine MehrStegdichtung (40.1-40.3) aus mehreren Stegdichtungen (40.1-40.3).

11. Verwendung nach Anspruch 9 oder 10, bei welcher der Montageabschnitt (2b) auf einem Rohrelement (20) der Durchführung (1) angeordnet ist, das nach dem Eingießen baulich integriert in unveränderter Position in dem Wandelement (21) verbleibt.

12. Verwendung nach einem der vorstehenden Ansprüche, bei welcher der Stülpabschnitt (2a) in dem Schritt gemäß Ziffer ii.) einfach ausgestülpt wird, sodass nach dem Schritt gemäß Ziffer i.) und vor dem Schritt gemäß Ziffer iii.) um genau ein Filmscharnier (2c) gestülpt wird.

13. Verwendung nach einem der vorstehenden Ansprüche, bei welcher der Stülpabschnitt (2a) Teil einer Stülphülse (2) ist, die an einem dem Stülpabschnitt (2a) entgegengesetzten Ende einen weiteren Stülpabschnitt (2d) aufweist, der bei dem Eingießen der Durchführung (1) auf einem Rohrelement (20) der Durchführung (1) angeordnet ist und nach dem Eingießen gemeinsam mit dem Rohrelement (20) baulich integriert in unveränderter Position in dem Wandelement (21) verbleibt.

14. Verwendung nach einem der vorstehenden Ansprüche, bei welcher die Durchführung (1) in eine Außenwand eines Gebäudes eingegossen wird, wobei der Stülpabschnitt (2a) in dem Schritt gemäß Ziffer ii.) zur Gebäudeaußenseite (20) hin ausgestülpt wird und entsprechend das Schutzrohr (31) in dem Schritt gemäß Ziffer iii.) von der Gebäudeaußenseite (30) her eingeschoben wird.

## Claims

1. Use of a duct (1) for casting into a wall element (21) and leading through a line (33),
wherein the duct (1) comprises a fold section (2a) which
i.) is folded in during the casting of the duct (1), and
ii.) is folded out after casting of the duct (1), wherein subsequently
iii.) a protective tube (31) is pushed into the folded out fold section (2a),
in which protective tube (31) the line (33) is laid,
**characterized in that** the protective tube (31) is pushed in to such an extent in the step according to item iii.) that the end of the protective tube (31) then lies inside the wall element (21) with respect to a longitudinal direction (22) of the line (33) and the wall element (21) assumes a support function for the pushed in protective tube (31).

2. Use according to claim 1, wherein the fold section (2a) is part of a fold sleeve (2) which further has a circumferential lip monolithic with the fold section (2a), which lip abuts against a formwork in the step according to item i.).

3. Use according to any one of the preceding claims, wherein the duct (1) comprises a toothed ring (60), the protective tube (31) being pushed into the toothed ring (60) in the step according to item iii.) and then being held secured by the toothed ring (60) against slipping out.

4. Use according to claim 3, in which the toothed ring (60) is a metal part.

5. Use according to claim 3 or 4, in which the folded in fold section (2a) in the step according to item i.) covers the toothed ring (60) inwardly with respect to radial directions.

6. Use according to any one of claims 3 to 5, wherein the fold section (2a) is part of a fold sleeve (2) further comprising a mounting section (2b) monolithic with the fold section (2a), wherein the protective tube (31) is pushed into the mounting section (2b) in the step according to item iii.), wherein the toothed ring (60) is arranged in the mounting section (2b).

7. Use according to any one of the preceding claims, wherein the fold section (2a) is part of a fold sleeve (2) further comprising a mounting section (2b) monolithic with the fold section (2a), wherein the protective tube (31) is pushed into the mounting section (2b) in the step according to item iii.), wherein a circumferentially extending projection (51) protruding inwardly with respect to radial directions is provided on an inner wall surface (2ba) of the mounting section (2b).

8. Use according to claim 7, wherein an inner wall surface (2aa) of the fold section (2a) facing inward after the step according to item ii.) is abutted against the inner wall surface (2ba) of the mounting section (2b) facing outward in the step according to item i.), wherein a depression (52) is provided on the inner wall surface (2aa) of the fold section (2a), in which the projection (51) provided on the inner wall surface (2ba) of the mounting section (2b) is arranged in the step according to item i.).

9. Use according to any one of the preceding claims, wherein the fold section (2a) is part of a fold sleeve (2) further comprising a mounting section (2b) monolithic with the fold section (2a), wherein in the step according to item ii.) a casting material of the wall member (21) abuts against an outer wall surface (2bb) of the mounting section (2b).

10. Use according to claim 9, wherein an outwardly projecting, circumferential projecting seal (40.1-40.3) is formed on the outer wall surface (2bb) of the mounting section (2b), preferably a multiple projecting seal (40.1-40.3) consisting of several projecting seals (40.1-40.3).

11. Use according to claim 9 or 10, wherein the mounting section (2b) is arranged on a tube element (20) of the duct (1) which remains structurally integrated in an unchanged position in the wall element (21) after casting.

12. Use according to any one of the preceding claims, wherein the fold section (2a) is once folded out in the step according to item ii.), such that after the step according to item i.) and before the step according to item iii.) folding occurs around exactly one film hinge (2c).

13. Use according to any one of the preceding claims, wherein the fold section (2a) is part of a fold sleeve (2) which has, at an end opposite the fold section (2a), a further fold section (2d) which, when the duct (1) is cast, is arranged on a tube element (20) of the duct (1) and, after casting, remains structurally integrated together with the tube element (20) in an unchanged position in the wall element (21).

14. Use according to one of the preceding claims, wherein the duct (1) is cast into an outer wall of a building, the fold section (2a) being folded out towards the building exterior (20) in the step according to item ii.) and accordingly the protective tube (31) being pushed in from the building exterior (30) in the step according to item iii.).

## Revendications

1. Utilisation d'une traversée murale (1) destinée à être scellée dans un élément formant paroi (21) et à faire passer une ligne (33),
ladite traversée murale (1) présentant une section rabattable (2a), qui
i.) est rabattue vers l'intérieur lors du scellement de la traversée murale (1), et
ii.) est rabattue vers l'extérieur après le scellement de la traversée murale (1), étant entendu que, après cela,
iii.) un tuyau de protection (31) est introduit dans la section rabattable (2a) rabattue vers l'extérieur,
ladite ligne (33) étant posée dans ledit tuyau de protection (31),
**caractérisée en ce que**, lors de l'étape iii.), le tuyau de protection (31) est introduit selon une profondeur telle que l'extrémité du tuyau de protection (31) se trouve alors à l'intérieur de l'élément formant paroi (21), eu égard à une direction longitudinale (22) de la conduite (33), et l'élément formant paroi (21) assure une fonction de support pour le tuyau de protection (31) introduit.

2. Utilisation selon la revendication 1, dans le cadre de laquelle la section rabattable (2a) fait partie d'un manchon rabattable (2) présentant en outre une lèvre périphérique formée d'un seul tenant avec la section rabattable (2a) et qui, lors de l'étape i.), repose contre un coffrage.

3. Utilisation selon l'une des revendications précédentes, dans le cadre de laquelle la traversée murale (1) présente une couronne dentée (60), ledit tuyau de protection (31), lors de l'étape iii.), étant introduit dans la couronne dentée (60) puis étant retenu par la couronne dentée (60) de façon à ne pouvoir s'en échapper.

4. Utilisation selon la revendication 3, dans le cadre de laquelle la couronne dentée (60) est une pièce métallique.

5. Utilisation selon la revendication 3 ou 4, dans le cadre de laquelle la section rabattable (2a) rabattue vers l'intérieur recouvre la couronne dentée (60) sur l'intérieur, eu égard à des directions radiales, lors de l'étape i.).

6. Utilisation selon l'une des revendications 3 à 5, dans le cadre de laquelle la section rabattable (2a) fait partie d'un manchon rabattable (2) présentant en outre une section de montage (2b) formée d'un seul tenant avec la section rabattable (2a), ledit tuyau de protection (31) étant introduit, lors de l'étape iii.), jusque dans la section de montage (2b), ladite couronne dentée (60) étant agencée dans la section de montage (2b).

7. Utilisation selon l'une des revendications précédentes, dans le cadre de laquelle la section rabattable (2a) fait partie d'un manchon rabattable (2) présentant en outre une section de montage (2b) formée d'un seul tenant avec la section rabattable (2a), ledit tuyau de protection (31) étant introduit, lors de l'étape iii.) jusque dans la section de montage (2b), et une proéminence (51) périphérique, en saillie vers l'intérieur eu égard aux directions radiales, étant prévue sur une surface de paroi intérieure (2ba) de la section de montage (2b).

8. Utilisation selon la revendication 7, dans le cadre de laquelle une surface de paroi intérieure (2aa) de la section rabattable (2a), qui est tournée vers l'intérieur à la suite de l'étape ii.), repose contre la surface de paroi intérieure (2ba) de la section de montage (2b) en étant tournée vers l'extérieur lors de l'étape i.), un renfoncement (52) étant prévu dans la surface de paroi intérieure (2aa) de la section rabattable (2a) pour loger la proéminence (51) prévue sur la surface de paroi intérieure (2ba) de la section de montage (2b) lors de l'étape i.).

9. Utilisation selon l'une des revendications précédentes, dans le cadre de laquelle la section rabattable (2a) fait partie d'un manchon rabattable (2) présentant en outre une section de montage (2b) formée d'un seul tenant avec la section rabattable (2a), un matériau coulable de l'élément formant paroi (21) venant reposer, lors de l'étape ii.), contre une surface de paroi extérieure (2bb) de la section de montage (2b).

10. Utilisation selon la revendication 9, dans le cadre de laquelle un joint à lèvre (40.1-40.3) est conçu sur la surface de paroi extérieure (2bb) de la section de montage (2b), de préférence un joint périphérique à plusieurs lèvres (40.1-40.3) à proéminence vers l'extérieur produit par plusieurs joints à lèvre (40.1-40.3).

11. Utilisation selon la revendication 9 ou 10, dans le cadre de laquelle la section de montage (2b) est agencée sur un élément tubulaire (20) de la traversée murale (1) qui demeure en une position inchangée dans l'élément formant paroi (21) après le scellement en y étant structurellement intégré.

12. Utilisation selon l'une des revendications précédentes, dans le cadre de laquelle la section rabattable (2a) est rabattue une fois vers l'extérieur lors de l'étape ii.), si bien que, après l'étape i.) et avant l'étape iii.), il a été effectué un rabattement sur une seule charnière souple (2c).

13. Utilisation selon l'une des revendications précédentes, dans le cadre de laquelle la section rabattable (2a) fait partie d'un manchon rabattable (2) présentant une autre section rabattable (2d) à une extrémité opposée à ladite section rabattable (2a), laquelle autre section rabattable est agencée sur un élément tubulaire (20) de la traversée murale (1) lors du scellement de la traversée murale (1) et demeure en une position inchangée dans l'élément formant paroi (21) après le scellement, en étant structurellement intégrée conjointement avec l'élément tubulaire (20).

14. Utilisation selon l'une des revendications précédentes, dans le cadre de laquelle la traversée murale (1) est scellée dans une paroi extérieure d'un bâtiment, ladite section rabattable (2a) étant rabattue vers l'extérieur lors de l'étape ii.), vers l'extérieur du bâtiment (20), et le tuyau de protection (31) étant par conséquent introduit, lors de l'étape iii.), depuis l'extérieur du bâtiment (30).
